# EUROPEAN PATENT APPLICATION

(11) **EP 4 207 731 A1**
(43) Date of publication of application: **05.07.2023**
(21) Application number: 21870960.8
(22) Date of filing: 13.07.2021
(51) Int. Cl.: H04N 5/225, H04N 5/238

(54) **METHOD AND APPARATUS FOR CONTROLLING LIGHT SUPPLEMENTING TIME OF CAMERA MODULE**

(30) Priority: 25.09.2020 CN 202011020997
(71) Applicant: Huawei Technologies Co., Ltd., Shenzhen, Guangdong 518129 (CN)
(72) Inventor: HE, Yanshan, Shenzhen, Guangdong 518129 (CN); XU, Yu, Shenzhen, Guangdong 518129 (CN); HUANG, Wei, Shenzhen, Guangdong 518129 (CN)
(74) Representative: Goddar, Heinz J.
(86) International application number: PCT/CN2021/106061
(87) International publication number: WO 2022/062582

(57) **Abstract**

This application provides a method and an apparatus for controlling a light compensation time of a camera module, and may be applied to an intelligent vehicle in the field of autonomous driving. The method includes: determining a first target area in a first image shot by a camera before a current frame, where the first target area is an area on which light compensation needs to be performed in the first image; determining a first exposure time period of a first target photosensitive chip row in the current frame based on the first target area, where the first target photosensitive chip row refers to a chip row that is in a photosensitive chip and that is used to generate image content in the first target area; and indicating, based on the first exposure time period, an infrared light source to perform light compensation when the photosensitive chip is exposed in the current frame. According to the method in embodiments of this application, a working time of the infrared light source can be reduced, and heat generated by the infrared camera module can be reduced.

## Description

This application claims priority to Chinese Patent Application No. 202011020997.9, filed with the China National Intellectual Property Administration on September 25, 2020 and entitled "METHOD AND APPARATUS FOR CONTROLLING LIGHT COMPENSATION TIME OF CAMERA MODULE", which is incorporated herein by reference in its entirety.

### TECHNICAL FIELD

This application relates to the field of autonomous driving, and more specifically, to a method and an apparatus for controlling a light compensation time of a camera module.

### BACKGROUND

Artificial intelligence (artificial intelligence, AI) is a theory, a method, a technology, or an application system that simulates, extends, and expands human intelligence by using a digital computer or a machine controlled by the digital computer, to sense an environment, obtain knowledge, and obtain an optimal result by using the knowledge. In other words, artificial intelligence is a branch of computer science, and is intended to understand the essence of intelligence and produce a new intelligent machine that can react in a manner similar to human intelligence. Artificial intelligence is to study design principles and implementation methods of various intelligent machines, so that the machines have perception, inference, and decision-making functions. Researches in the field of artificial intelligence include robotics, natural language processing, computer vision, decision-making and inference, human-computer interaction, recommendation and search, an AI basic theory, and the like.

Autonomous driving is a mainstream application in the field of artificial intelligence. The autonomous driving technology relies on collaboration of computer vision, a radar, a monitoring apparatus, a global positioning system, and the like, to implement autonomous driving of a motor vehicle without human intervention. An autonomous vehicle uses various computing systems to assist in transporting passengers or goods from one location to another location. Some autonomous vehicles may require some initial or continuous input from an operator (such as a navigator, a driver, or a passenger). The autonomous vehicle allows the operator to switch from a manual operation mode to an autonomous driving mode or a mode between the manual operation mode and the autonomous driving mode. Because the autonomous driving technology does not require a human to drive the motor vehicle, driving errors caused by people can be effectively avoided in theory, traffic accidents can be reduced, and road transportation efficiency can be improved. Therefore, the autonomous driving technology attracts increasing attention.

With an increasing number of vehicles, safety of autonomous driving receives more and more attention. The conventional autonomous driving technology cannot achieve completely unmanned driving, and monitor cameras can be used to monitor a cockpit in real time to improve safety of autonomous driving. For example, an infrared (infrared, IR) camera may be used to perform fatigue detection on a driver, and perform behavior recognition, gesture recognition, and abandoned object detection on the driver or another passenger in a cockpit.

Infrared cameras can be unaffected by visible light and can work properly during day and at night. During exposure, a conventional infrared camera uses an infrared light source as a light source, and performs row-by-row exposure on each photosensitive chip row in a photosensitive chip by using a rolling shutter (rolling shutter) until all photosensitive chip rows are exposed, so that a complete exposure is completed. However, in this case, the infrared camera module has a high heat generation.

### SUMMARY

This application provides a method and an apparatus for controlling a light compensation time of a camera module, to reduce heat of an infrared camera module.

According to a first aspect, a method for controlling a light compensation time of a camera module is provided, where the method includes:
determining a first target area in a first image shot by a camera module before a current frame, where the first target area is an area on which light compensation needs to be performed in the first image; determining a first exposure time period of a first target photosensitive chip row in the current frame based on the first target area, where the first target photosensitive chip row refers to a chip row that is in a photosensitive chip and that is used to generate image content in the first target area; and indicating, based on the first exposure time period, an infrared light source to perform light compensation when the photosensitive chip is exposed in the current frame.

The camera module may include a camera, and the camera may include a photosensitive chip.

In this embodiment of this application, the first exposure time period of the first target photosensitive chip row in the current frame is determined based on the area on which light compensation needs to be performed in the first image, and when the photosensitive chip is exposed in the current frame, the infrared light source is indicated, based on the first exposure time period, to perform light compensation, so that a working time of the infrared light source can be reduced, and heat generated by the infrared camera module can be reduced.

In addition, in the method for controlling the light compensation time of the camera module in this embodiment of this application, a hardware module (or unit) in the camera module is not added or changed, but a light compensation time period (for example, the first exposure time period) of the photosensitive chip in the current frame is determined based on the first target area, and light compensation is performed in the light compensation time period when the photosensitive chip is exposed in the current frame, to reduce the working time of the infrared light source, and reduce heat of the infrared camera module without increasing costs.

Further, because no hardware module (or unit) in the camera module is added or changed, a size of the camera module is not increased in the method for controlling the light compensation time of the camera module in this embodiment of this application, and this facilitates configuration and use of the camera module in a vehicle.

Optionally, the camera may further include an infrared light source and a rolling shutter.

It should be noted that the infrared light source in this embodiment of this application may be a built-in infrared light source of the camera, or may be an independent external infrared light source. This is not limited in this embodiment of this application.

With reference to the first aspect, in some implementations of the first aspect, the determining a first target area in a first image shot by the camera before a current frame includes: determining the first target area in the first image based on a preset target object.

In this embodiment of this application, the light compensation time of the photosensitive chip in the current frame may be flexibly controlled based on the preset target object.

With reference to the first aspect, in some implementations of the first aspect, the first target area is a face area in the first image.

With reference to the first aspect, in some implementations of the first aspect, the photosensitive chip includes a plurality of photosensitive chip rows, and a plurality of pixel rows in the first image correspond to the plurality of photosensitive chip rows; and the determining a first exposure time period of a first target photosensitive chip row in the current frame based on the first target area includes: determining the first target photosensitive chip row corresponding to a pixel row in the first target area in the first image; and determining the first exposure time period of the first target photosensitive chip row in the current frame.

In this embodiment of this application, the plurality of pixel rows in the first image correspond to the plurality of photosensitive chip rows, and the first target photosensitive chip row may be conveniently determined based on the pixel row in the first target area in the first image. Therefore, it is convenient to determine the first exposure time period of the first target photosensitive chip row in the current frame.

With reference to the first aspect, in some implementations of the first aspect, the method further includes: determining a second target area in a second image obtained in the current frame, where the second target area is an area on which light compensation needs to be performed in the second image; determining a second exposure time period of a second target photosensitive chip row in a subsequent frame based on the second target area, where the second target photosensitive chip row refers to a chip row that is in the photosensitive chip and that is used to generate image content in the second target area; and indicating, based on the second exposure time period, the infrared light source to perform light compensation when the photosensitive chip is exposed in the subsequent frame.

In this embodiment of this application, an effect of the image shot by the camera module can be improved by adjusting, based on the second target area in the second image obtained in the current frame, the photosensitive chip in the light compensation time period of the subsequent frame.

With reference to the first aspect, in some implementations of the first aspect, the method further includes: determining a third exposure time period of the first target photosensitive chip row in a subsequent frame based on the first exposure time period; and indicating, based on the third exposure time period, the infrared light source to perform light compensation when the photosensitive chip is exposed in the subsequent frame.

In this embodiment of this application, a light compensation time period (for example, the third exposure time period) of the subsequent frame may be conveniently determined based on the first exposure time period.

It should be noted that the first exposure time period or the third exposure time period in this embodiment of this application may be represented by a relative time, or may be represented by an absolute time.

When a relative time is used to represent the exposure time period, for example, assuming that an exposure start moment of the current frame is T₀, the first exposure time period may refer to a time period in which a start moment is T₀ + T₁ and an end moment is T₀ + T₂. That is, an interval between the start moment of the first exposure time period and the exposure start moment of the current frame is T₁, and an interval between the end moment of the first exposure time period and the exposure start moment of the current frame is T₂.

Similarly, assuming that an exposure start moment of the subsequent frame is T₃, the third exposure time period may be a time period in which a start moment is T₃ + T₁ and an end moment is T₃ + T₂. That is, an interval between the start moment of the third exposure time period and the exposure start moment of the subsequent frame is T₁, and an interval between the end moment of the third exposure time period and the exposure start moment of the subsequent frame is T₂.

When an absolute time is used to represent the exposure time period, for example, assuming that an exposure start moment of the current frame is T₀, the first exposure time period may refer to a time period in which a start moment is T₄ and an end moment is T₅. In this case, an interval between the start moment of the first exposure time period and the exposure start moment of the current frame is T₄ - T₀ = T₁, and an interval between the end moment of the first exposure time period and the exposure start moment of the current frame is T₅ - T₀ = T₂.

Similarly, assuming that an exposure start moment of the subsequent frame is T₃, the third exposure time period may refer to a time period in which a start moment is T₆ and an end moment is T₇. That is, an interval between the start moment of the third exposure time period and the exposure start moment of the subsequent frame is T₆ - T₃ = T₁, and an interval between the end moment of the third exposure time period and the exposure start moment of the subsequent frame is T₇ - T₃ = T₂.

According to a second aspect, an apparatus for controlling a light compensation time of a camera module is provided, where the apparatus includes:
a first determining unit, configured to determine a first target area in a first image shot by a camera before a current frame, where the first target area is an area on which light compensation needs to be performed in the first image; a second determining unit, configured to determine a first exposure time period of a first target photosensitive chip row in the current frame based on the first target area, where the first target photosensitive chip row refers to a chip row that is in a photosensitive chip and that is used to generate image content in the first target area; and an indication unit, configured to indicate, based on the first exposure time period, an infrared light source to perform light compensation when the photosensitive chip is exposed in the current frame.

The camera module may include a camera, and the camera may include a photosensitive chip.

In this embodiment of this application, the first exposure time period of the first target photosensitive chip row in the current frame is determined based on the area on which light compensation needs to be performed in the first image, and when the photosensitive chip is exposed in the current frame, the infrared light source is indicated, based on the first exposure time period, to perform light compensation, so that a working time of the infrared light source can be reduced, and heat generated by the infrared camera module can be reduced.

In addition, in the method for controlling the light compensation time of the camera module in this embodiment of this application, a hardware module (or unit) in the camera module is not added or changed, but a light compensation time period (for example, the first exposure time period) of the photosensitive chip in the current frame is determined based on the first target area, and light compensation is performed in the light compensation time period when the photosensitive chip is exposed in the current frame, to reduce the working time of the infrared light source, and reduce heat of the infrared camera module without increasing costs.

Further, because no hardware module (or unit) in the camera module is added or changed, a size of the camera module is not increased in the method for controlling the light compensation time of the camera module in this embodiment of this application, and this facilitates configuration and use of the camera module in a vehicle.

Optionally, the camera may further include the infrared light source and a rolling shutter.

It should be noted that the infrared light source in this embodiment of this application may be a built-in infrared light source of the camera, or may be an independent external infrared light source. This is not limited in this embodiment of this application.

With reference to the second aspect, in some implementations of the second aspect, the first determining unit is specifically configured to determine the first target area in the first image based on a preset target object.

In this embodiment of this application, the light compensation time of the photosensitive chip in the current frame may be flexibly controlled based on the preset target object.

With reference to the second aspect, in some implementations of the second aspect, the first target area is a face area in the first image.

With reference to the second aspect, in some implementations of the second aspect, the photosensitive chip includes a plurality of photosensitive chip rows, and a plurality of pixel rows in the first image correspond to the plurality of photosensitive chip rows; and the second determining unit is specifically configured to: determine the first target photosensitive chip row corresponding to a pixel row in the first target area in the first image; and determine the first exposure time period of the first target photosensitive chip row in the current frame.

In this embodiment of this application, the plurality of pixel rows in the first image correspond to the plurality of photosensitive chip rows, and the first target photosensitive chip row may be conveniently determined based on the pixel row in the first target area in the first image. Therefore, it is convenient to determine the first exposure time period of the first target photosensitive chip row in the current frame.

With reference to the second aspect, in some implementations of the second aspect, the first determining unit is further configured to determine a second target area in a second image obtained in the current frame, where the second target area is an area on which light compensation needs to be performed in the second image; the second determining unit is further configured to determine a second exposure time period of a second target photosensitive chip row in a subsequent frame based on the second target area, where the second target photosensitive chip row refers to a chip row that is in the photosensitive chip and that is used to generate image content in the second target area; and the indication unit is further configured to indicate, based on the second exposure time period, the infrared light source to perform light compensation when the photosensitive chip is exposed in the subsequent frame.

In this embodiment of this application, an effect of the image shot by the camera module can be improved by adjusting, based on the second target area in the second image obtained in the current frame, the photosensitive chip in the light compensation time period of the subsequent frame.

With reference to the second aspect, in some implementations of the second aspect, the indication unit is further configured to: determine a third exposure time period of the first target photosensitive chip row in a subsequent frame based on the first exposure time period; and indicate, based on the third exposure time period, the infrared light source to perform light compensation when the photosensitive chip is exposed in the subsequent frame.

In this embodiment of this application, a light compensation time period (for example, the third exposure time period) of the subsequent frame may be conveniently determined based on the first exposure time period.

It should be noted that the first exposure time period or the third exposure time period in this embodiment of this application may be represented by a relative time, or may be represented by an absolute time.

When a relative time is used to represent the exposure time period, for example, assuming that an exposure start moment of the current frame is T₀, the first exposure time period may refer to a time period in which a start moment is T₀ + T₁ and an end moment is T₀ + T₂. That is, an interval between the start moment of the first exposure time period and the exposure start moment of the current frame is T₁, and an interval between the end moment of the first exposure time period and the exposure start moment of the current frame is T₂.

Similarly, assuming that an exposure start moment of the subsequent frame is T₃, the third exposure time period may be a time period in which a start moment is T₃ + T₁ and an end moment is T₃ + T₂. That is, an interval between the start moment of the third exposure time period and the exposure start moment of the subsequent frame is T₁, and an interval between the end moment of the third exposure time period and the exposure start moment of the subsequent frame is T₂.

When an absolute time is used to represent the exposure time period, for example, assuming that an exposure start moment of the current frame is T₀, the first exposure time period may refer to a time period in which a start moment is T₄ and an end moment is T₅. In this case, an interval between the start moment of the first exposure time period and the exposure start moment of the current frame is T₄ - T₀ = T₁, and an interval between the end moment of the first exposure time period and the exposure start moment of the current frame is T₅ - T₀ = T₂.

Similarly, assuming that an exposure start moment of the subsequent frame is T₃, the third exposure time period may refer to a time period in which a start moment is T₆ and an end moment is T₇. That is, an interval between the start moment of the third exposure time period and the exposure start moment of the subsequent frame is T₆ - T₃ = T₁, and an interval between the end moment of the third exposure time period and the exposure start moment of the subsequent frame is T₇ - T₃ = T₂.

According to a third aspect, a camera module is provided. The camera module includes a storage medium and a central processing unit. The storage medium may be a non-volatile storage medium, and the storage medium stores a computer-executable program. The central processing unit is connected to the non-volatile storage medium, and executes the computer-executable program to implement the method according to any one of the first aspect or the possible implementations of the first aspect.

According to a fourth aspect, a chip is provided. The chip includes a processor and a data interface, and the processor reads, through the data interface, instructions stored in a memory, to perform the method according to any one of the first aspect or the possible implementations of the first aspect.

Optionally, in an implementation, the chip may further include the memory. The memory stores instructions. The processor is configured to execute the instructions stored in the memory. When the instructions are executed, the processor is configured to perform the method according to any one of the first aspect or the possible implementations of the first aspect.

According to a fifth aspect, a computer-readable storage medium is provided. The computer-readable medium stores program code executed by a device, and the program code includes instructions used to perform the method according to any one of the first aspect or the possible implementations of the first aspect.

According to a sixth aspect, an automobile is provided. The automobile includes the apparatus for controlling the light compensation time of the camera module according to the second aspect or the camera module according to the third aspect.

In this embodiment of this application, the first exposure time period of the first target photosensitive chip row in the current frame is determined based on the area on which light compensation needs to be performed in the first image, and when the photosensitive chip is exposed in the current frame, the infrared light source is indicated, based on the first exposure time period, to perform light compensation, so that a working time of the infrared light source can be reduced, and heat generated by the infrared camera module can be reduced.

### BRIEF DESCRIPTION OF DRAWINGS

FIG. 1 is a schematic diagram of a structure of an autonomous vehicle according to an embodiment of this application;
FIG. 2 is a schematic diagram of a structure of an autonomous driving system according to an embodiment of this application;
FIG. 3 is a schematic diagram of a structure of a camera module according to an embodiment of this application;
FIG. 4 is a schematic block diagram of a method for controlling a light compensation time of a camera module according to an embodiment of this application;
FIG. 5 is a schematic diagram of a structure of a photosensitive chip according to an embodiment of this application;
FIG. 6 is a schematic block diagram of determining a light compensation time period of a current frame according to an embodiment of this application;
FIG. 7 is a schematic block diagram of a method for controlling a light compensation time of a camera module according to another embodiment of this application;
FIG. 8 is a schematic block diagram of a method for calculating a photosensitive chip row corresponding to a face frame according to an embodiment of this application;
FIG. 9 is a schematic block diagram of a method for controlling a light compensation time of a camera module according to still another embodiment of this application;
FIG. 10 is a schematic block diagram of a method for calculating a photosensitive chip row corresponding to a body frame according to an embodiment of this application;
FIG. 11 is a schematic block diagram of an apparatus for controlling a light compensation time of a camera module according to an embodiment of this application; and
FIG. 12 is a schematic block diagram of an apparatus for controlling a light compensation time of a camera module according to another embodiment of this application.

### DESCRIPTION OF EMBODIMENTS

The following describes the technical solutions of this application with reference to the accompanying drawings.

The technical solutions in embodiments of this application may be applied to various vehicles. The vehicle may be specifically an internal combustion locomotive, a smart electric vehicle, or a hybrid vehicle, or the vehicle may be a vehicle of another power type, or the like. This is not limited in embodiments of this application.

The vehicle in embodiments of this application may be an autonomous vehicle. For example, the autonomous vehicle may be configured with an autonomous driving mode. The autonomous driving mode may be a fully autonomous driving mode, or may be a partially autonomous driving mode. This is not limited in embodiments of this application.

The vehicle in embodiments of this application may be further configured with another driving mode. The another driving mode may include one or more of a plurality of driving modes such as a motion mode, an economic mode, a standard mode, an off-road mode, a snow mode, and a ramp mode. The autonomous vehicle may switch between the autonomous driving mode and the foregoing plurality of driving models (of driving the vehicle by a driver). This is not limited in embodiments of this application.

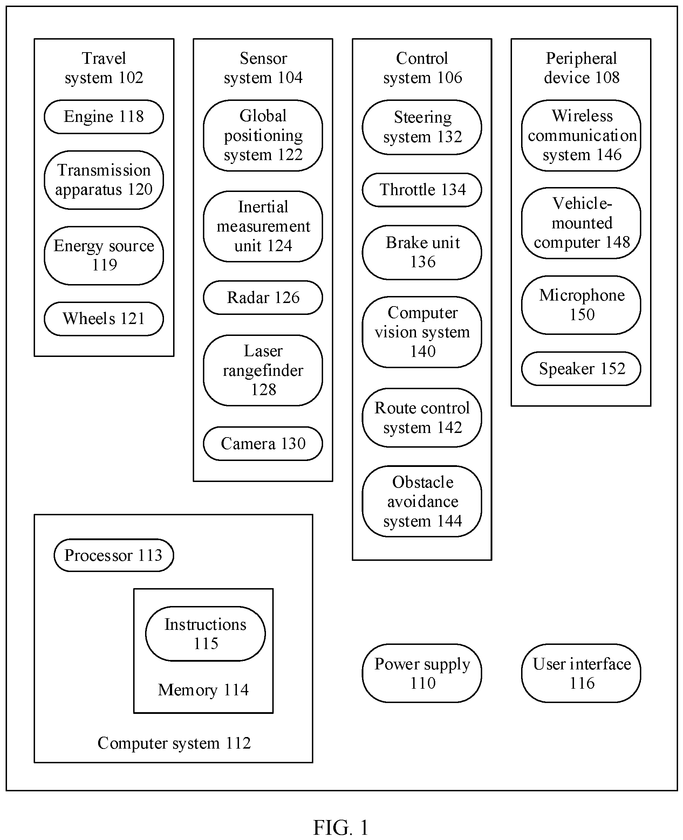

FIG. 1 is a functional block diagram of a vehicle 100 according to an embodiment of this application.

In an embodiment, the vehicle 100 is configured to be in a fully autonomous driving mode or a partially autonomous driving mode.

For example, the vehicle 100 in an autonomous driving mode may control the vehicle 100, and may determine current statuses of the vehicle and an ambient environment of the vehicle through manual operations, determine possible behavior of at least one another vehicle in the ambient environment, determine a confidence level corresponding to a possibility that the another vehicle performs the possible behavior, and control the vehicle 100 based on determined information. When the vehicle 100 is in the autonomous driving mode, the vehicle 100 may be configured to operate without interacting with a person.

The vehicle 100 may include various subsystems, for example, a travel system 102, a sensor system 104, a control system 106, one or more peripheral devices 108, a power supply 110, a computer system 112, and a user interface 116.

Optionally, the vehicle 100 may include more or fewer subsystems, and each subsystem may include a plurality of elements. In addition, all the subsystems and elements of the vehicle 100 may be interconnected in a wired or wireless manner.

The travel system 102 may include a component providing power to the vehicle 100 for moving. In an embodiment, the travel system 102 may include an engine 118, an energy source 119, a transmission apparatus 120, and wheels/tires 121. The engine 118 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 118 converts the energy source 119 into mechanical energy.

Examples of the energy source 119 include gasoline, diesel, other oil-based fuels, propane, other compressed gas-based fuels, ethanol, solar panels, batteries, and other power sources. The energy source 119 may also provide energy to another system of the vehicle 100.

The transmission apparatus 120 may transmit mechanical power from the engine 118 to the wheels 121. The transmission apparatus 120 may include a gearbox, a differential, and a drive shaft.

In an embodiment, the transmission apparatus 120 may further include another component, for example, a clutch. The drive shaft may include one or more shafts that may be coupled to one or more wheels 121.

The sensor system 104 may include several sensors that can sense information about an ambient environment of the vehicle 100.

For example, the sensor system 104 may include a positioning system 122 (the positioning system may be a GPS system, a BeiDou system, or another positioning system), an inertial measurement unit (inertial measurement unit, IMU) 124, a radar 126, a laser rangefinder 128, and a camera 130. The sensor system 104 may further include a sensor (for example, an in-vehicle air quality monitor, a fuel gauge, or an engine oil thermometer) of an internal system of the monitored vehicle 100. Sensor data from one or more of these sensors can be used to detect an object and corresponding features (a position, a shape, a direction, a speed, and the like) of the object. Such detection and recognition are key functions of a safe operation of the autonomous vehicle 100.

The positioning system 122 may be configured to estimate a geographic location of the vehicle 100. The IMU 124 is configured to sense a location and an orientation change of the vehicle 100 based on an inertial acceleration. In an embodiment, the IMU 124 may be a combination of an accelerometer and a gyroscope.

The radar 126 may sense an object in the ambient environment of the vehicle 100 through a radio signal. In some embodiments, in addition to sensing an object, the radar 126 may further be configured to sense a speed and/or a moving direction of the object.

The laser rangefinder 128 may sense, by using a laser, an object in an environment in which the vehicle 100 is located. In some embodiments, the laser rangefinder 128 may include one or more laser sources, a laser scanner, one or more detectors, and another system component.

The camera 130 may be configured to capture a plurality of images of the ambient environment of the vehicle 100. The camera 130 may be a static camera or a video camera. The camera 130 may further include an infrared camera and another camera. For example, the camera 130 may include a cockpit monitor camera in a camera monitor system (camera monitor system, CMS) and a driver monitor camera in a driver monitor system (driver monitor system, DMS).

The control system 106 controls operations of the vehicle 100 and components of the vehicle 100. The control system 106 may include various elements, including a steering system 132, a throttle 134, a brake unit 136, a sensor fusion algorithm 138, a computer vision system 140, a route control system 142, and an obstacle avoidance system 144.

The steering system 132 may be operated to adjust a moving direction of the vehicle 100. For example, in an embodiment, the steering system 132 may be a steering wheel system.

The throttle 134 is configured to control an operating speed of the engine 118 and further control a speed of the vehicle 100.

The brake unit 136 is configured to control the vehicle 100 to decelerate. The brake unit 136 may use friction to slow down the wheels 121. In another embodiment, the brake unit 136 may convert kinetic energy of the wheels 121 into a current. Alternatively, the brake unit 136 may reduce a rotational speed of the wheels 121 in another form to control the speed of the vehicle 100.

The computer vision system 140 may be operated to process and analyze an image captured by the camera 130, to recognize an object and/or a feature in the ambient environment of the vehicle 100. The object and/or the feature may include a traffic signal, a road boundary, and an obstacle. The computer vision system 140 may use an object recognition algorithm, a structure from motion (Structure from Motion, SFM) algorithm, video tracking, and another computer vision technology. In some embodiments, the computer vision system 140 may be configured to draw a map for an environment, track an object, estimate a speed of the object, and the like.

The route control system 142 is configured to determine a driving route of the vehicle 100. In some embodiments, the route control system 142 may combine data from the sensor 138, the GPS 122, and one or more predetermined maps to determine the driving route of the vehicle 100.

The obstacle avoidance system 144 is configured to identify, evaluate, and avoid or bypass a potential obstacle in the environment of the vehicle 100 in another manner.

Certainly, in an example, the control system 106 may add or alternatively include components in addition to those shown and described. Alternatively, the control system 106 may remove some of the components shown above.

The vehicle 100 interacts with an external sensor, another vehicle, another computer system, or a user by using the peripheral device 108. The peripheral device 108 may include a wireless communication system 146, a vehicle-mounted computer 148, a microphone 150, and/or a speaker 152.

In some embodiments, the peripheral device 108 provides a means for the user of the vehicle 100 to interact with the user interface 116. For example, the vehicle-mounted computer 148 may provide information to the user of the vehicle 100. The user interface 116 may further operate the vehicle-mounted computer 148 to receive an input from the user. The vehicle-mounted computer 148 may perform an operation by using a touchscreen. In another case, the peripheral device 108 may provide a means for the vehicle 100 to communicate with another device located in the vehicle. For example, the microphone 150 may receive audio (for example, a voice command or another audio input) from the user of the vehicle 100. Likewise, the speaker 152 may output audio to the user of the vehicle 100.

The wireless communication system 146 may wirelessly communicate with one or more devices directly or through a communications network. For example, the wireless communication system 146 may perform communication through a 3G cellular network such as CDMA, EVDO, or GSM/GPRS, perform communication through a 4G cellular network such as LTE, or perform communication through a 5G cellular network. The wireless communication system 146 may communicate with a wireless local area network (wireless local area network, WLAN) by using Wi-Fi. In some embodiments, the wireless communication system 146 may directly communicate with a device by using an infrared link, Bluetooth, or ZigBee. Other wireless protocols, for example, various vehicle communication systems, such as the wireless communication system 146, may include one or more dedicated short range communications (dedicated short range communications, DSRC) devices, and these devices may include public and/or private data communication between the vehicle and/or roadside stations.

The power supply 110 may provide power to various components of the vehicle 100. In an embodiment, the power supply 110 may be a rechargeable lithium-ion or lead-acid battery. One or more battery packs of such batteries may be configured as the power supply to supply power to the components of the vehicle 100. In some embodiments, the power supply 110 and the energy source 119 may be implemented together, for example, in some pure electric vehicles.

Some or all of functions of the vehicle 100 are controlled by the computer system 112. The computer system 112 may include at least one processor 113. The processor 113 executes instructions 115 stored in a non-transient computer-readable medium such as a data storage apparatus 114. The computer system 112 may alternatively be a plurality of computing devices that control individual components or subsystems of the vehicle 100 in a distributed manner.

The processor 113 may be any conventional processor, for example, a commercially available CPU. Alternatively, the processor may be a dedicated device such as an ASIC or another hardware-based processor. Although FIG. 1 functionally illustrates the processor, the memory, and other components of a computer 110 in a same block, a person of ordinary skill in the art should understand that the processor, the computer, or the memory may actually include a plurality of processors, computers, or memories in a same physical housing. For example, the memory may be a hard disk drive, or another storage medium located in a housing different from that of the computer 110. Thus, it is understood that a reference to the processor or the computer includes a reference to a set of processors or computers or memories that may or may not operate in parallel. Different from using a single processor to perform the steps described herein, some components, such as a steering component and a deceleration component, each may include a respective processor that performs only computation related to a component-specific function.

In various aspects described herein, the processor may be located far away from the vehicle and communicate wirelessly with the vehicle. In another aspect, some processes described herein are performed on a processor disposed inside the vehicle, while others are performed by a remote processor, including taking steps necessary for single manipulation.

In some embodiments, the data storage apparatus 114 may include the instructions 115 (for example, program logic), and the instructions 115 may be executed by the processor 113 to perform various functions of the vehicle 100, including the functions described above. The data storage apparatus 114 may further include additional instructions, including instructions for sending data to, receiving data from, interacting with, and/or controlling one or more of the travel system 102, the sensor system 104, the control system 106, and the peripheral device 108.

In addition to the instructions 115, the data storage apparatus 114 may further store data, such as a road map, route information, a location, a direction, a speed, and other vehicle data of the vehicle, and other information. Such information may be used by the vehicle 100 and the computer system 112 when the vehicle 100 operates in an autonomous mode, a semi-autonomous mode, and/or a manual mode.

The user interface 116 is used to provide information for or receive information from the user of the vehicle 100. Optionally, the user interface 116 may include one or more input/output devices in a set of peripheral devices 108, for example, the wireless communication system 146, the vehicle-mounted computer 148, the microphone 150, and the speaker 152.

The computer system 112 may control the functions of the vehicle 100 based on inputs received from various subsystems (for example, the travel system 102, the sensor system 104, and the control system 106) and from the user interface 116. For example, the computer system 112 may access and use input from the control system 106 to control the steering unit 132 to avoid an obstacle detected by the sensor system 104 and the obstacle avoidance system 144. In some embodiments, the computer system 112 may be operated to provide control over many aspects of the vehicle 100 and the subsystems of the vehicle 100.

Optionally, one or more of the foregoing components may be installed separately from or associated with the vehicle 100. For example, the data storage apparatus 114 may exist partially or completely separate from the vehicle 100. The foregoing components may be communicatively coupled together in a wired and/or wireless manner.

Optionally, the foregoing components are merely examples. In actual application, components in the foregoing modules may be added or deleted based on an actual requirement. FIG. 1 should not be understood as any limitation on this embodiment of this application.

An autonomous vehicle driving on a road, such as the vehicle 100, may identify an object in an ambient environment of the vehicle to determine an adjustment to a current speed. The object may be another vehicle, a traffic control device, or another object of another type. In some examples, the autonomous vehicle may independently consider each identified object, and may determine a to-be-adjusted speed of the autonomous vehicle based on characteristics of each identified object, such as a current speed of the object, acceleration of the object, and a distance between the object and the autonomous vehicle.

Optionally, the vehicle 100 or the computing device associated with the vehicle 100 (such as the computer system 112, the computer vision system 140, and the memory 114 in FIG. 1) may predict behavior of an identified object based on features of the identified object and statuses of the ambient environment (for example, traffic, rain, or ice on the road). Optionally, each of the identified objects depends on behavior of each other, and therefore all the identified objects may be considered together to predict behavior of a single identified object. The vehicle 100 can adjust the speed of the vehicle 100 based on the predicted behavior of the identified object. In other words, the autonomous vehicle can determine, based on the predicted behavior of the object, a specific stable state (for example, acceleration, deceleration, or stop) to which the vehicle needs to be adjusted. In this process, another factor, for example, a transverse location of the vehicle 100 on a road on which the vehicle 100 moves, a curvature of the road, or proximity between static and dynamic objects, may also be considered, to determine the speed of the vehicle 100.

In addition to providing an instruction for adjusting the speed of the autonomous vehicle, the computing device may provide an instruction for modifying a steering angle of the vehicle 100, so that the autonomous vehicle follows a given trajectory and/or maintains safe transverse and longitudinal distances from an object (for example, a car in an adjacent lane on the road) next to the autonomous vehicle.

The vehicle 100 may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in embodiments of this application.

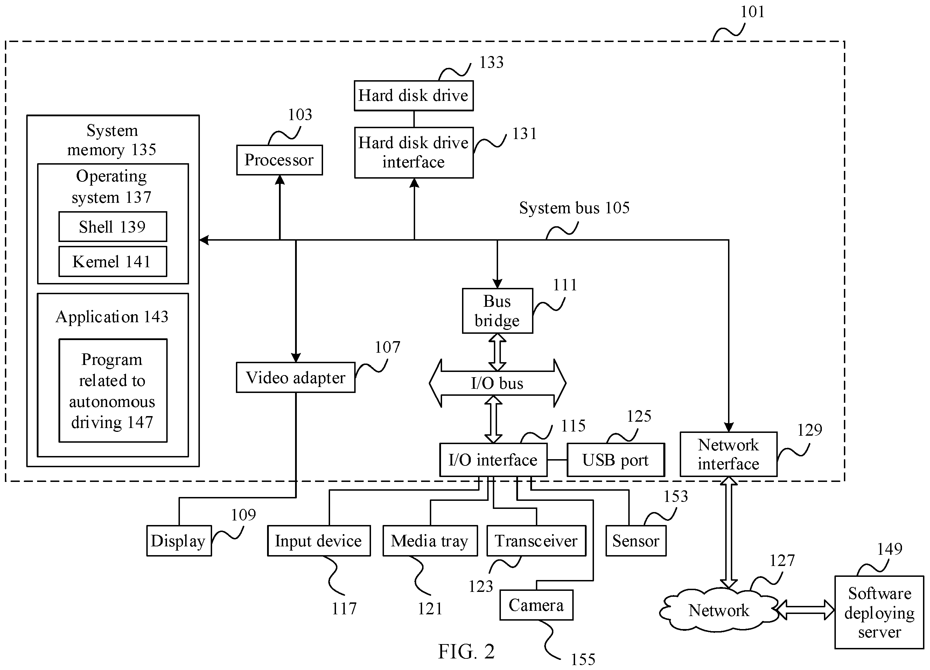

FIG. 2 is a schematic diagram of an autonomous driving system according to an embodiment of this application.

The autonomous driving system shown in FIG. 2 includes a computer system 101. The computer system 101 includes a processor 103, and the processor 103 is coupled to a system bus 105. The processor 103 may be one or more processors, and each processor may include one or more processor cores. A video adapter (video adapter) 107 may drive a display 109, and the display 109 is coupled to the system bus 105. The system bus 105 is coupled to an input/output (I/O) bus 113 through a bus bridge 111. An I/O interface 115 is coupled to the I/O bus. The I/O interface 115 communicates with a plurality of I/O devices, for example, an input device 117 (such as a keyboard, a mouse, and a touchscreen), a media tray (media tray) 121 (such as a CD-ROM and a multimedia interface), a transceiver 123 (which can send and/or receive a radio communication signal), a camera 155 (which can capture static and dynamic digital video images), and an external USB interface 125. Optionally, an interface connected to the I/O interface 115 may be a USB interface.

The processor 103 may be any conventional processor, including a reduced instruction set computer (reduced instruction set computer, RISC) processor, a complex instruction set computer (complex instruction set computer, CISC) processor, or a combination thereof. Optionally, the processor may be a dedicated apparatus such as an application-specific integrated circuit (application-specific integrated circuit, ASIC). Optionally, the processor 103 may be a neural network processor or a combination of the neural network processor and the foregoing conventional processor.

Optionally, in various embodiments described herein, the computer system 101 may be located away from an autonomous vehicle (for example, the computer system 101 may be located in a cloud or in a server), and may wirelessly communicate with the autonomous vehicle. In another aspect, some of processes described herein are performed on a processor disposed in the autonomous vehicle, and others are performed by a remote processor, including taking an action required to perform a single manipulation.

The computer 101 may communicate with a software deploying server 149 by using a network interface 129. The network interface 129 is a hardware network interface, such as a network interface card. A network 127 may be an external network such as the internet, or an internal network such as the Ethernet or a virtual private network (virtual private network, VPN). Optionally, the network 127 may alternatively be a wireless network, for example, a Wi-Fi network or a cellular network.

A hard disk drive interface is coupled to the system bus 105. The hardware drive interface is connected to a hard disk drive. A system memory 135 is coupled to the system bus 105. Data running in the system memory 135 may include an operating system 137 of the computer 101 and an application 143.

The operating system includes a shell (shell) 139 and a kernel (kernel) 141. The shell is an interface between a user and the kernel (kernel) of the operating system. The shell is an outermost layer of the operating system. The shell manages interaction between the user and the operating system: waiting for an input from the user, interpreting the input from the user to the operating system, and processing various output results of the operating system.

The kernel 141 includes parts of the operating system that are used for managing a memory, a file, a peripheral device, and a system resource. When directly interacting with hardware, the kernel of the operating system usually runs a process, provides inter-process communication, and provides functions such as CPU time slice management, interrupt, memory management, and I/O management.

The application 143 includes an application related to controlling a light compensation time of the camera module, for example, determining a first target area in a first image shot by a camera module before a current frame, where the first target area is an area on which light compensation needs to be performed in the first image; determining a first exposure time period of a first target photosensitive chip row in the current frame based on the first target area, where the first target photosensitive chip row refers to a chip row that is in a photosensitive chip and that is used to generate image content in the first target area; and controlling, by using a rolling shutter, an infrared light source to perform light compensation only in the first exposure time period when the photosensitive chip is exposed in the current frame.

The application 143 may also exist on a system of the software deploying server 149 (deploying server). In an embodiment, when the application 143 needs to be executed, the computer system 101 may download the application 143 from the software deploying server 149 (deploying server).

A sensor 153 is associated with the computer system 101. The sensor 153 is configured to detect an ambient environment of the computer 101, or the sensor 153 may be configured to monitor a situation in a cockpit of the autonomous vehicle. Optionally, the computer 101 is located on the autonomous vehicle.

For example, the sensor 153 may include a driver monitor camera in a driver monitor system (driver monitor system, DMS), and the driver monitor camera may be configured to perform fatigue detection, facial recognition, distraction detection, in-loop detection, and the like on a driver of an autonomous vehicle. Alternatively, the sensor 153 may include a cockpit monitor camera in a camera monitor system (camera monitor system, CMS), and the cockpit monitor camera may be configured to perform behavior recognition, gesture recognition, abandoned object detection, and the like on a driver or another passenger in the cockpit.

For example, the application 143 may detect an image collected by the sensor 153, to determine an area on which light compensation needs to be performed in the image, and determine, based on the area on which light compensation needs to be performed, a light compensation time period of the photosensitive chip during exposure of the current frame. In this case, the infrared light source is controlled to perform light compensation in the light compensation time period by using the rolling shutter, to reduce heat of the infrared camera module.

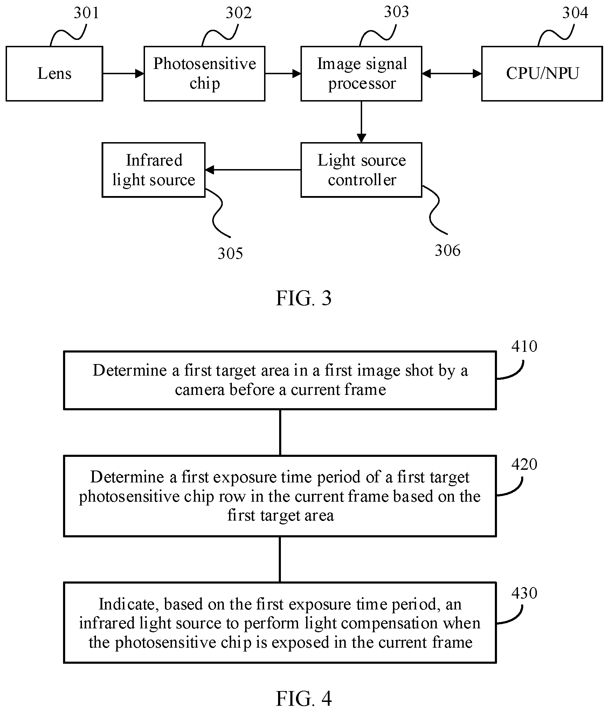

FIG. 3 is a schematic diagram of an architecture of a camera module 300 according to an embodiment of this application. It should be understood that the camera module 300 shown in FIG. 3 is merely an example instead of a limitation. The camera module 300 may include more or fewer components. This is not limited in this embodiment of this application.

The camera module 300 may be used in a driver monitor camera in a driver monitor system (driver monitor system, DMS), to perform fatigue detection, facial recognition, distraction detection, in-loop detection, and the like on a driver of an autonomous vehicle. Alternatively, the camera module 300 may be used in a cockpit monitor camera in a camera monitor system (camera monitor system, CMS), to perform behavior recognition, gesture recognition, abandoned object detection, and the like on a driver or another passenger in the cockpit.

As shown in FIG. 3, the camera module 300 may include a lens 301, a photosensitive chip 302, an image signal processor (image signal processor, ISP) 303, a central processing unit (central processing unit, CPU)/neural processing unit (neural processing unit, NPU) 304, an infrared (infrared, IR) light source 305, and a light source controller 306.

The lens 301 may include a rolling shutter (rolling shutter). The photosensitive chip 302 may be a complementary metal oxide semiconductor (complementary metal oxide semiconductor, CMOS). The ISP 303 may be a stack ISP (stack ISP) integrated on the CMOS, for example, the ISP 303 may be integrated on the photosensitive chip 302; or the ISP 303 may alternatively be a discrete ISP (discrete ISP). The infrared light source 305 may be a light emitting diode (light-emitting diode, LED), or the infrared light source 305 may alternatively be a vertical-external-cavity surface-emitting laser (vertical-external-cavity surface-emitting, VECSEL).

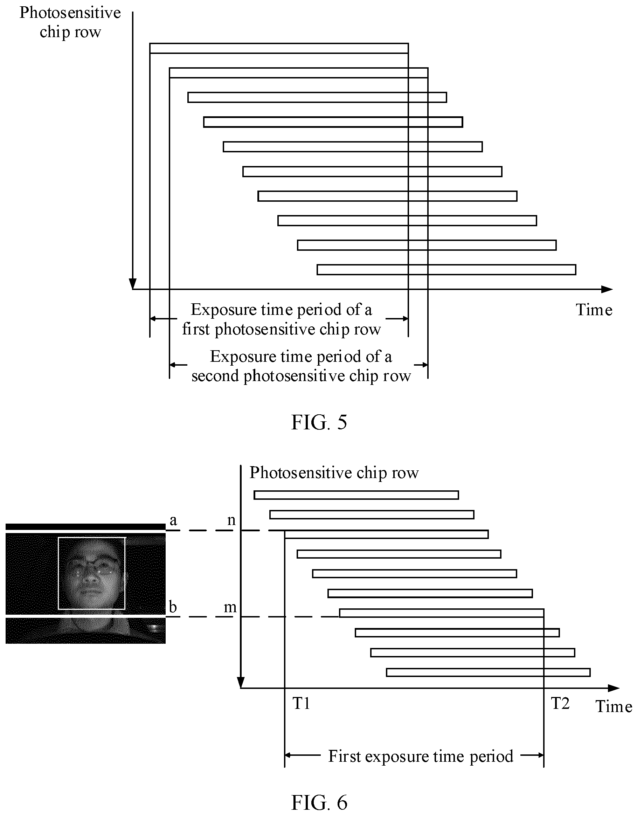

In the conventional technology, during exposure, a conventional infrared camera uses an infrared light source as a light source, and performs row-by-row exposure on each photosensitive chip row in a photosensitive chip by using a rolling shutter (rolling shutter). As shown in FIG. 5, exposure time periods of each photosensitive chip row in the photosensitive chip are different, and one complete exposure is completed until all photosensitive chip rows in the photosensitive chip are exposed.

The infrared light source refers to a light source with a wavelength of 780 to 1400 nanometers (nm), and is light invisible to human eyes. The infrared light source cooperates with the infrared camera, so that shooting is not affected by visible light and can be done normally during day or at night. In an exposure process performed by a conventional infrared camera, the infrared light source is always working, that is, exposure duration of the photosensitive chip (in a frame) is equal to working duration of the infrared light source. However, the infrared light source generates heat when it works. Therefore, long-time working of the infrared light source causes high heat of the camera module.

Based on the foregoing problem, this application provides a method for controlling a light compensation time of a camera module. A first exposure time period of a first target photosensitive chip row in a current frame is determined based on an area on which light compensation needs to be performed in a first image, and when the photosensitive chip is exposed in the current frame, light compensation is only performed in the first exposure time period, to reduce a working time of an infrared light source, and reduce heat of an infrared camera module.

The following describes in detail a method for controlling a light compensation time of a camera module according to an embodiment of this application with reference to FIG. 4 to FIG. 10.

FIG. 4 is a schematic flowchart of a method 400 for controlling a light compensation time of a camera module according to an embodiment of this application.

The method 400 shown in FIG. 4 may include step 410, step 420, and step 430. It should be understood that the method 400 shown in FIG. 4 is merely an example rather than a limitation, and the method 400 may include more or fewer steps. This is not limited in this embodiment of this application. The following separately describes these steps in detail.

The method 400 shown in FIG. 4 may be performed by the camera module in the camera 130 in the vehicle 100 in FIG. 1, or the method 400 may be performed by the camera module in the camera 155 or the sensor 153 in the autonomous driving system in FIG. 2.

The camera module in the method 400 may include a photosensitive chip, an infrared light source, and a rolling shutter. For example, the camera module in the method 400 may be shown as the camera module 300 in FIG. 3.

S410: Determine a first target area in a first image shot by the camera before a current frame.

The first target area may be an area on which light compensation needs to be performed in the first image.

Optionally, content included in the area on which light compensation needs to be performed in the first image may be related to a usage of the camera module. For example, the first target area in the first image may be determined based on a preset target object.

For example, the camera module may be used in a driver monitor camera in a driver monitor system (driver monitor system, DMS), to perform fatigue detection, facial recognition, distraction detection, in-loop detection, and the like on a driver of an autonomous vehicle. Correspondingly, when the camera module is used in the driver monitor camera, the preset target object may be a face area in the first image.

For another example, the camera module may also be used in a cockpit monitor camera in a camera monitor system (camera monitor system, CMS), to perform behavior recognition, gesture recognition, and abandoned object detection on a driver or another passenger in the cockpit. Correspondingly, when the camera module is used in the cockpit monitor camera, the preset target object may be a body area in the first image.

For another example, the camera may be further configured to detect an external camera of another surrounding vehicle, and detect and identify another vehicle around the vehicle. Correspondingly, when the camera is configured to detect an external camera of another surrounding vehicle, the preset target object may be an area of a vehicle (for example, another vehicle around the vehicle) in the first image.

Optionally, the first image may be detected by using a deep learning algorithm or a Haar operator, to determine an area on which light compensation needs to be performed in the first image, that is, the first target area.

For example, a neural network model may be used to determine a face area (or a body area) in the first image, that is, the first target area on which light compensation needs to be performed in the first image.

S420: Determine a first exposure time period of a first target photosensitive chip row in the current frame based on the first target area.

The first target photosensitive chip row may be a chip row that is in the photosensitive chip and that is used to generate image content in the first target area.

Optionally, the photosensitive chip may include a plurality of photosensitive chip rows, the first image may include a plurality of pixel rows, and the plurality of pixel rows in the first image may correspond to the plurality of photosensitive chip rows.

For example, as shown in FIG. 6, the photosensitive chip may include 960 photosensitive chip rows, the first image may include 960 pixel (pixel) rows, and the 960 pixel rows included in the first image may be in a one-to-one correspondence with the 960 photosensitive chip rows included in the photosensitive chip.

FIG. 6 shows a case in which a quantity of rows of the photosensitive chip rows in the photosensitive chip is equal to a quantity of rows of the pixel rows in the first image, that is, a case in which no scaling transformation is performed on an image generated after the photosensitive chip is exposed.

It should be noted that the quantity of rows of photosensitive chip rows in the photosensitive chip and the quantity of rows of pixel rows in the first image are not limited in this embodiment of this application. That is, in this embodiment of this application, the quantity of rows of the photosensitive chip rows in the photosensitive chip does not need to be equal to the quantity of rows of the pixel rows in the first image, and the plurality of pixel rows in the first image does not need to be in a one-to-one correspondence with the plurality of photosensitive chip rows.

Optionally, the determining a first exposure time period of a first target photosensitive chip row in the current frame based on the first target area may include:
determining the first target photosensitive chip row corresponding to a pixel row in the first target area in the first image; and determining the first exposure time period of the first target photosensitive chip row in the current frame.

For example, as shown in FIG. 6, a pixel row a of an upper boundary of the first target area in the first image, and a pixel row b of a lower boundary of the first target area in the first image may be determined. A photosensitive chip row n in the photosensitive chip corresponding to the pixel row a and a photosensitive chip row m in the photosensitive chip corresponding to the pixel row b are determined, and all photosensitive chip rows from the photosensitive chip row n to the photosensitive chip row m are the first target photosensitive chip row.

Further, an exposure time period of the first target photosensitive chip row in the current frame may be calculated.

For example, assuming that an exposure start time of a first photosensitive chip row is T0, exposure time of each photosensitive chip row is T, and a time difference between the exposure start time of two adjacent photosensitive chip rows is t, an exposure start time T1 of an n^{th} photosensitive chip row is: T1 = T0 + n × t, and a time point T2 at which exposure starts for an m^{th} row of the photosensitive chip rows is: T2 = T0 + T + m × t, that is, a start moment T1 of the infrared light source performs light compensation and an end moment T2 of the infrared light source performs light compensation shown in FIG. 6.

In this case, the exposure time period (T1 to T2) of the first target photosensitive chip row in the current frame is the first exposure time period.

S430: Indicate, based on the first exposure time period, an infrared light source to perform light compensation when the photosensitive chip is exposed in the current frame.

In this embodiment of this application, the first exposure time period of the first target photosensitive chip row in the current frame is determined based on the area on which light compensation needs to be performed in the first image, and when the photosensitive chip is exposed in the current frame, the infrared light source is indicated, based on the first exposure time period, to perform light compensation, so that a working time of the infrared light source can be reduced, and heat generated by the infrared camera module can be reduced.

In addition, in the method for controlling the light compensation time of the camera module in this embodiment of this application, a hardware module (or unit) in the camera module is not added or changed, but a light compensation time period (for example, the first exposure time period) of the photosensitive chip in the current frame is determined based on the first target area, and light compensation is performed in the light compensation time period when the photosensitive chip is exposed in the current frame, to reduce the working time of the infrared light source, and reduce heat of the infrared camera module without increasing costs.

Further, because no hardware module (or unit) in the camera module is added or changed, a size of the camera module is not increased in the method for controlling the light compensation time of the camera module in this embodiment of this application, and this facilitates configuration and use of the camera module in a vehicle.

Optionally, the method 400 may further include step 432.

S432: Determine a third exposure time period of the first target photosensitive chip row in a subsequent frame based on the first exposure time period; and indicate, based on the third exposure time period, the infrared light source to perform light compensation when the photosensitive chip is exposed in the subsequent frame.

That is, when the photosensitive chip is exposed in the subsequent frame, the infrared light source is controlled to perform light compensation only in a time period in which the first target photosensitive chip row is exposed.

In this embodiment of this application, a light compensation time period (for example, the third exposure time period) of the subsequent frame may be conveniently determined based on the first exposure time period.

Optionally, the method 400 may further include step 434, step 436, and step 438.

S434: Determine a second target area in a second image obtained in the current frame, where the second target area is an area on which light compensation needs to be performed in the second image.

S436: Determine a second exposure time period of a second target photosensitive chip row in a subsequent frame based on the second target area, where the second target photosensitive chip row refers to a chip row that is in the photosensitive chip and that is used to generate image content in the second target area.

S438: Indicate, based on the second exposure time period, the infrared light source to perform light compensation when the photosensitive chip is exposed in the subsequent frame.

In this embodiment of this application, an effect of the image shot by the camera module can be improved by adjusting, based on the second target area in the second image obtained in the current frame, the photosensitive chip in the light compensation time period of the subsequent frame.

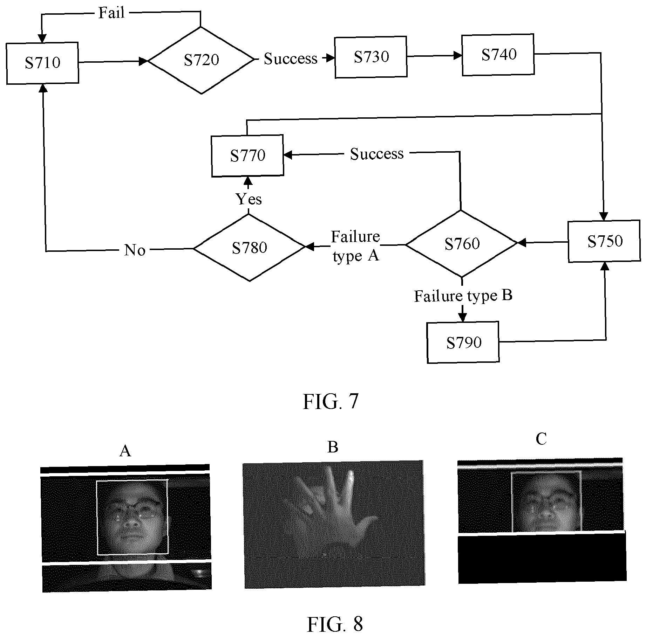

FIG. 7 is a schematic flowchart of a method 700 for controlling a light compensation time of a camera module according to an embodiment of this application.

The method 700 shown in FIG. 7 may be performed by the camera module in the camera 130 in the vehicle 100 in FIG. 1, or the method 700 may be performed by the camera module in the camera 155 or the sensor 153 in the autonomous driving system in FIG. 2.

The camera module in the method 700 may include a photosensitive chip, an infrared light source, and a rolling shutter. For example, the camera module in the method 700 may be shown as the camera module 300 in FIG. 3.

For example, the camera module in the method 700 may be used in a vehicle-mounted driver monitor camera. The driver monitor camera may be placed behind a steering wheel or at an A pillar of a vehicle, and is configured to perform facial recognition, fatigue detection, distraction detection, in-loop detection, and the like on a driver.

The method 700 shown in FIG. 7 may include step 710 to step 790. It should be understood that the method 700 shown in FIG. 7 is merely an example rather than a limitation, and the method 700 may include more or fewer steps. This is not limited in this embodiment of this application. The following separately describes these steps in detail.

S710: During exposure of the photosensitive chip, the infrared light source performs light compensation throughout the process, to obtain a first image.

For example, when a first frame of image in each second is shot, or when the camera module enters a reset state, a light source controller may control the infrared light source to perform light compensation throughout the exposure period of the photosensitive chip, to obtain the first image, so as to ensure that all areas in the first image can receive good illumination.

S720: Perform face detection on the first image.

For example, the first image may be sent to a CPU/NPU. Correspondingly, the CPU/NPU may perform face detection on the first image by using a deep learning algorithm or a Haar operator.

If a face frame in the first image is detected, the face detection succeeds, and S730 is performed.

If no face frame in the first image is detected (for example, as shown in part B in FIG. 8, a face area in the first image is blocked or there is no face area in the first image), the face detection fails, and S710 is performed. That is, when a next frame of image is shot, the infrared light source performs light compensation throughout the exposure period of the photosensitive chip, to obtain an image with good illumination in all areas, and perform face detection again on the obtained image.

S730: Calculate a photosensitive chip row corresponding to the face frame.

The core area in the first image may be determined based on the face frame, and a photosensitive chip row corresponding to the core area in the first image may be calculated.

Optionally, a margin may be considered when the core area in the first image is determined.

For example, a threshold may be preset, and the margin is set when the core area in the first image is determined, so that a distance between the face frame and a no-light area (that is, an area on which light compensation does not need to be performed in the first image) is greater than or equal to the preset threshold.

As shown in part A in FIG. 8, a distance between the upper boundary of the face frame and the no-light area is greater than or equal to the preset threshold, and a distance between the lower boundary of the face frame and the no-light area is greater than or equal to the preset threshold.

The core area is equivalent to the first target area in the method 400 in FIG. 4. For details, refer to the description of the embodiment in the method 400. Details are not described herein again.

S740: Calculate a first light compensation time period corresponding to the photosensitive chip row.

The exposure time period corresponding to the photosensitive chip row is obtained, that is, the first light compensation time period.

S750: Perform light compensation in the determined light compensation time period during exposure of the photosensitive chip, to obtain a second image.

For example, the determined light compensation time period may be the first light compensation time period or the second light compensation time period.

S760: Perform face detection on the second image.

As shown in part A in FIG. 8, if a face frame in the second image is detected, and a distance between the face frame and the no-light area (that is, an area on which light compensation does not need to be performed in the second image) is greater than or equal to the preset threshold, the face detection succeeds, and S770 is performed.

As shown in part B in FIG. 8, if no face frame in the second image is detected (for example, a face area in the second image is blocked or there is no face area in the second image), the face detection fails, the face detection belongs to a failure type A, and S780 is performed to determine whether a quantity of times of face detection failures is less than 10.

As shown in part C in FIG. 8, if a face frame in the second image is detected, but a distance between the face frame and the no-light area (that is, an area on which light compensation does not need to be performed in the second image) is less than the preset threshold, the face detection fails, the face detection belongs to a failure type B, and S790 is performed.

S770: Continue to shoot a next frame of image based on the first light compensation time period.

In a process of shooting an image in a subsequent frame, the first light compensation time period may be maintained, that is, in the process of shooting an image in the subsequent frame, the infrared light source is controlled to continue to perform light compensation in the first light compensation time period corresponding to the photosensitive chip row.

S780: Determine whether the quantity of times of face detection failures is less than 10.

If no face frame in the first image is detected, and the quantity of times of face detection failures is less than 10, in the process of shooting an image in the subsequent frame, the infrared light source is controlled to continue to perform light compensation in the first light compensation time period corresponding to the photosensitive chip row. Alternatively, when the quantity of times of face detection failures is greater than or equal to 10 (or the first light compensation time period is periodically reset per second), S710 is performed.

S790: Determine a second light compensation time period based on the second image.

Face detection is performed on the second image to obtain a face frame of the second image, a photosensitive chip row corresponding to the face frame of the second image is calculated, and the second light compensation time period corresponding to the photosensitive chip row (a photosensitive chip row corresponding to the face frame of the second image) is calculated.

Then, S750 is performed, and in the process of shooting an image in the subsequent frame, the infrared light source is controlled to perform light compensation in the second light compensation time period corresponding to the photosensitive chip row.

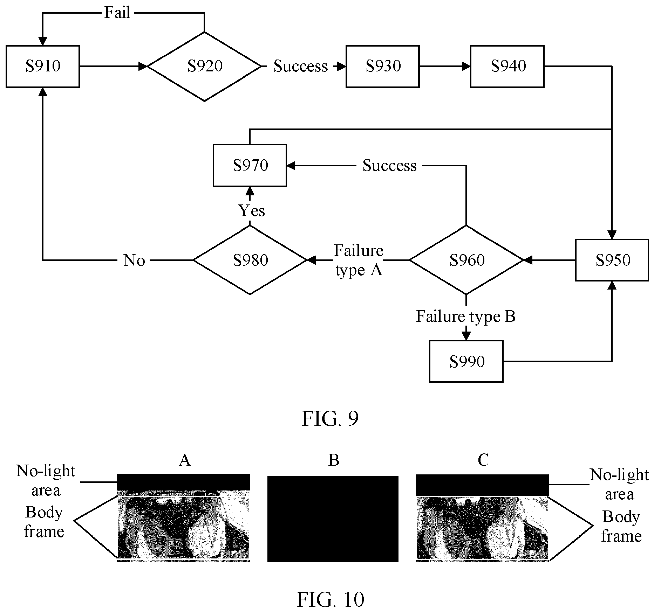

FIG. 9 is a schematic flowchart of a method 900 for controlling a light compensation time of a camera module according to an embodiment of this application.

The method 900 shown in FIG. 9 may be performed by the camera module in the camera 130 in the vehicle 100 in FIG. 1, or the method 900 may be performed by the camera module in the camera 155 or the sensor 153 in the autonomous driving system in FIG. 2.

The camera module in the method 900 may include a photosensitive chip, an infrared light source, and a rolling shutter. For example, the camera module in the method 900 may be shown as the camera module 300 in FIG. 3.

For example, the camera module in the method 900 may be used in a vehicle-mounted cockpit monitor camera. The cockpit monitor camera may be placed under a rearview mirror inside the vehicle, and is configured to perform behavior recognition, gesture recognition, and abandoned object detection on a driver and a front passenger in the cockpit.

The method 900 shown in FIG. 9 may include step 910 to step 990. It should be understood that the method 900 shown in FIG. 9 is merely an example rather than a limitation, and the method 900 may include more or fewer steps. This is not limited in this embodiment of this application. The following separately describes these steps in detail.

S910: During exposure of the photosensitive chip, the infrared light source performs light compensation throughout the process, to obtain a first image.

For example, when a first frame of image in each second is shot, or when the camera module enters a reset state, a light source controller may control the infrared light source to perform light compensation throughout the exposure period of the photosensitive chip, to obtain the first image, so as to ensure that all areas in the first image can receive good illumination.

S920: Perform body detection on the first image.

For example, the first image may be sent to a CPU/NPU. Correspondingly, the CPU/NPU may perform body detection on the first image by using a deep learning algorithm or a Haar operator.

If a body frame in the first image is detected, the body detection succeeds, and S930 is performed.

If no body frame in the first image is detected (for example, as shown in part B in FIG. 10, a body area in the first image is blocked or there is no body area in the first image), the body detection fails, and S910 is performed. That is, when a next frame of image is shot, the infrared light source performs light compensation throughout the exposure period of the photosensitive chip, to obtain an image with good illumination in all areas, and perform body detection again on the obtained image.

S930: Calculate a photosensitive chip row corresponding to the body frame.

The core area in the first image may be determined based on the body frame, and a photosensitive chip row corresponding to the core area in the first image may be calculated.

Optionally, a margin may be considered when the core area in the first image is determined.

For example, a threshold may be preset, and the margin is set when the core area in the first image is determined, so that a distance between the body frame and a no -light area (that is, an area on which light compensation does not need to be performed in the first image) is greater than or equal to the preset threshold.

As shown in part A in FIG. 10, a distance between the upper boundary of the body frame and the no-light area is greater than or equal to the preset threshold, and a distance between the lower boundary of the body frame and the no-light area is greater than or equal to the preset threshold.

The core area is equivalent to the first target area in the method 400 in FIG. 4. For details, refer to the description of the embodiment in the method 400. Details are not described herein again.

S940: Calculate a first light compensation time period corresponding to the photosensitive chip row.

The exposure time period corresponding to the photosensitive chip row is obtained, that is, the first light compensation time period.

S950: Perform light compensation in the determined light compensation time period during exposure of the photosensitive chip, to obtain a second image.

For example, the determined light compensation time period may be the first light compensation time period or the second light compensation time period.

S960: Perform body detection on the second image.

As shown in part A in FIG. 10, if a body frame in the first image is detected, and a distance between the body frame and the no-light area (that is, an area on which light compensation does not need to be performed in the first image) is greater than or equal to the preset threshold, the body detection succeeds, and S970 is performed.

As shown in part B in FIG. 10, if no body frame in the first image is detected (for example, a body area in the first image is blocked or there is no body area in the first image), the body detection fails, and S980 is performed to determine whether a quantity of times of body detection failures is less than 10.

As shown in part C in FIG. 10, if a body frame in the first image is detected, but a distance between the body frame and the no-light area (that is, an area on which light compensation does not need to be performed in the first image) is less than the preset threshold, the body detection fails, and S990 is performed.

S970: Continue to shoot a next frame of image based on the first light compensation time period.

In a process of shooting an image in a subsequent frame, the first light compensation time period may be maintained, that is, in the process of shooting an image in the subsequent frame, the infrared light source is controlled to continue to perform light compensation in the first light compensation time period corresponding to the photosensitive chip row.

S980: Determine whether the quantity of times of body detection failures is less than 10.

If no body frame in the first image is detected, and the quantity of times of body detection failures is less than 10, in the process of shooting an image in the subsequent frame, the infrared light source is controlled to continue to perform light compensation in the first light compensation time period corresponding to the photosensitive chip row. Alternatively, when the quantity of times of body detection failures is greater than or equal to 10 (or the first light compensation time period is periodically reset per second), S910 is performed.

S990: Determine a second light compensation time period based on the second image.

Body detection is performed on the second image to obtain a body frame of the second image, a photosensitive chip row corresponding to the body frame of the second image is calculated, and the second light compensation time period corresponding to the photosensitive chip row (a photosensitive chip row corresponding to the body frame of the second image) is calculated.

Then, S950 is performed, and in the process of shooting an image in the subsequent frame, the infrared light source is controlled to perform light compensation in the second light compensation time period corresponding to the photosensitive chip row.

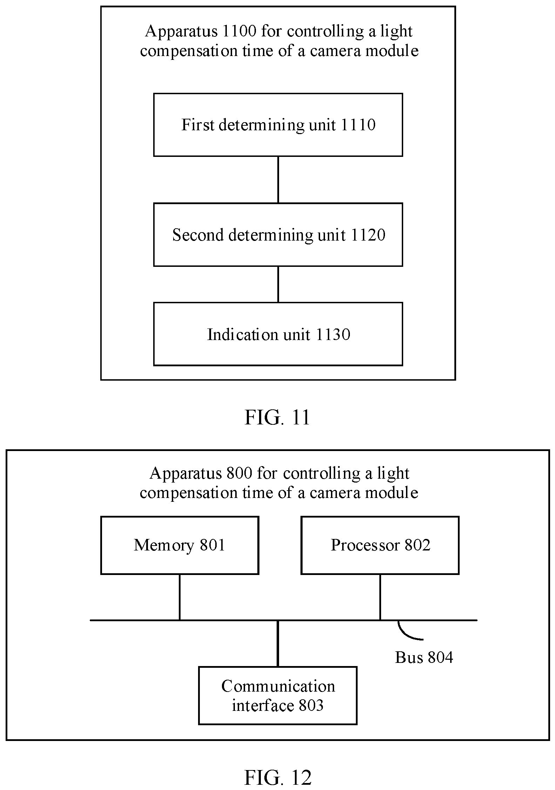

FIG. 11 is a schematic block diagram of an apparatus 1100 for controlling a light compensation time of a camera module according to an embodiment of this application. It should be understood that the apparatus 1100 for controlling a light compensation time of a camera module shown in FIG. 11 is merely an example. The apparatus 1100 in this embodiment of this application may further include another module or unit. It should be understood that the apparatus 1100 can perform the steps in the methods in FIG. 4, FIG. 7, and FIG. 9. To avoid repetition, details are not described herein again.

The camera module may include a camera, and the camera may include a photosensitive chip, an infrared light source, and a rolling shutter. For example, the camera module may be shown as the camera module 300 in FIG. 3.

In a possible implementation of this embodiment of this application, the apparatus 1100 for controlling a light compensation time of a camera module may include:
a first determining unit 1110, configured to determine a first target area in a first image shot by the camera before a current frame, where the first target area is an area on which light compensation needs to be performed in the first image;
a second determining unit 1120, configured to determine a first exposure time period of a first target photosensitive chip row in the current frame based on the first target area, where the first target photosensitive chip row refers to a chip row that is in the photosensitive chip and that is used to generate image content in the first target area; and
an indication unit 1130, configured to indicate, based on the first exposure time period, an infrared light source to perform light compensation when the photosensitive chip is exposed in the current frame.

The first determining unit and the second determining unit may be a same module or unit. This is not limited in this embodiment of this application.

Optionally, the first determining unit is specifically configured to: determine the first target area in the first image based on a preset target object.

Optionally, the first target area is a face area in the first image.

Optionally, the photosensitive chip includes a plurality of photosensitive chip rows, and a plurality of pixel rows in the first image correspond to the plurality of photosensitive chip rows; and the second determining unit 1120 is specifically configured to:
determine the first target photosensitive chip row corresponding to a pixel row in the first target area in the first image; and determine the first exposure time period of the first target photosensitive chip row in the current frame.

Optionally, the first determining unit 1110 is further configured to determine a second target area in a second image obtained in the current frame, where the second target area is an area on which light compensation needs to be performed in the second image; the second determining unit 1120 is further configured to determine a second exposure time period of a second target photosensitive chip row in a subsequent frame based on the second target area, where the second target photosensitive chip row refers to a chip row that is in the photosensitive chip and that is used to generate image content in the second target area; and the indication unit 1130 is further configured to indicate, based on the second exposure time period, the infrared light source to perform light compensation when the photosensitive chip is exposed in the subsequent frame.

Optionally, the indication unit 1130 is further configured to: determine a third exposure time period of the first target photosensitive chip row in a subsequent frame based on the first exposure time period; and indicate, based on the third exposure time period, the infrared light source to perform light compensation when the photosensitive chip is exposed in the subsequent frame.

It should be understood that the apparatus 1100 herein for controlling a light compensation time of a camera module is implemented in a form of a function module. The term "module" herein may be implemented in a form of software and/or hardware. This is not specifically limited. For example, the "module" may be a software program, a hardware circuit, or a combination thereof that implements the foregoing functions. The hardware circuit may include an application-specific integrated circuit (application-specific integrated circuit, ASIC), an electronic circuit, a processor (for example, a shared processor, a dedicated processor, or a group processor) configured to execute one or more software or firmware programs and a memory, a combined logic circuit, and/or other suitable components that support the described functions.

In an example, the apparatus 1100 for controlling a light compensation time of a camera module provided in this embodiment of this application may be a camera module in an autonomous driving system, or may be a camera module configured in an automobile head unit, or may be an automobile head unit (or a processor) in an autonomous vehicle, or may be a chip configured in an automobile head unit and is configured to perform the method described in embodiments of this application.

FIG. 12 is a schematic block diagram of an apparatus 800 for controlling a light compensation time of a camera module according to an embodiment of this application. The apparatus 800 shown in FIG. 12 includes a memory 801, a processor 802, a communication interface 803, and a bus 804. The memory 801, the processor 802, and the communication interface 803 implement communication connection between each other through the bus 804.

The memory 801 may be a read only memory (read only memory, ROM), a static storage device, a dynamic storage device, or a random access memory (random access memory, RAM). The memory 801 may store a program. When the program stored in the memory 801 is executed by the processor 802, the processor 802 is configured to perform steps of the method for controlling a light compensation time of a camera module in this embodiment of this application, for example, the processor 802 may perform the steps of the embodiments shown in FIG. 4, FIG. 7, and FIG. 9.

The processor 802 may be a general-purpose central processing unit (central processing unit, CPU), a microprocessor, an application-specific integrated circuit (application-specific integrated circuit, ASIC), or one or more integrated circuits, and is configured to execute a related program, so as to implement the method for controlling a light compensation time of a camera module in method embodiments of this application.

The processor 802 may be an integrated circuit chip and has a signal processing capability. In an implementation process, steps of the method for controlling a light compensation time of a camera module according to embodiments of this application may be completed by using an integrated logic circuit of hardware in the processor 802 or by using an instruction in a form of software.

The processor 802 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. The processor 802 may implement or execute the methods, steps, and logical block diagrams disclosed in embodiments of this application. The general-purpose processor may be a microprocessor, or the processor may be any conventional processor or the like.

Steps of the methods disclosed with reference to embodiments of this application may be directly executed and accomplished by using a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 801, and the processor 802 reads information in the memory 801, and completes, with reference to hardware of the processor 802, functions that need to be executed by units included in the apparatus for controlling a light compensation time of a camera module in embodiments of this application, or performs the method for controlling a light compensation time of a camera module in method embodiments of this application, for example, the processor 802 may perform steps/functions in the embodiments shown in FIG. 4, FIG. 7, and FIG. 9.

The communication interface 803 may use, but not limited to, a transceiver apparatus of a transceiver type, to implement communication between the apparatus 800 and another device or a communication network.

The bus 804 may include a channel on which information is transmitted between the components (for example, the memory 801, the processor 802, and the communication interface 803) of the apparatus 800.

It should be understood that the apparatus 800 shown in this embodiment of this application may be a camera module in an autonomous driving system, or may be a camera module configured in an automobile head unit, or may be an automobile head unit (or a processor) in an autonomous vehicle, or may be a chip configured in an automobile head unit and is configured to perform the method described in embodiments of this application.

It should be understood that, the processor in embodiments of this application may be a central processing unit (central processing unit, CPU). The processor may be further another general purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects, and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may indicate an "and/or" relationship. For details, refer to the context for understanding.

In this application, "at least one" refers to one or more, and "a plurality of" refers to two or more. "At least one of the following items (pieces)" or a similar expression thereof refers to any combination of these items, including any combination of singular items (pieces) or plural items (pieces). For example, at least one item (piece) of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for controlling a light compensation time of a camera module, wherein the camera module comprises a camera, the camera comprises a photosensitive chip, and the method comprises:
determining a first target area in a first image shot by the camera before a current frame, wherein the first target area is an area on which light compensation needs to be performed in the first image;
determining a first exposure time period of a first target photosensitive chip row in the current frame based on the first target area, wherein the first target photosensitive chip row refers to a chip row that is in the photosensitive chip and that is used to generate image content in the first target area; and
indicating, based on the first exposure time period, an infrared light source to perform light compensation when the photosensitive chip is exposed in the current frame.

2. The method according to claim 1, wherein the determining a first target area in a first image shot by the camera before a current frame comprises:
determining the first target area in the first image based on a preset target object.

3. The method according to claim 1 or 2, wherein the first target area is a face area in the first image.

4. The method according to any one of claims 1 to 3, wherein the photosensitive chip comprises a plurality of photosensitive chip rows, and a plurality of pixel rows in the first image correspond to the plurality of photosensitive chip rows; and
the determining a first exposure time period of a first target photosensitive chip row in the current frame based on the first target area comprises:
determining the first target photosensitive chip row corresponding to a pixel row in the first target area in the first image; and
determining the first exposure time period of the first target photosensitive chip row in the current frame.

5. The method according to any one of claims 1 to 4, wherein the method further comprises:
determining a second target area in a second image obtained in the current frame, wherein the second target area is an area on which light compensation needs to be performed in the second image;
determining a second exposure time period of a second target photosensitive chip row in a subsequent frame based on the second target area, wherein the second target photosensitive chip row refers to a chip row that is in the photosensitive chip and that is used to generate image content in the second target area; and
indicating, based on the second exposure time period, the infrared light source to perform light compensation when the photosensitive chip is exposed in the subsequent frame.

6. The method according to any one of claims 1 to 4, wherein the method further comprises:
determining a third exposure time period of the first target photosensitive chip row in a subsequent frame based on the first exposure time period; and
indicating, based on the third exposure time period, the infrared light source to perform light compensation when the photosensitive chip is exposed in the subsequent frame.

7. An apparatus for controlling a light compensation time of a camera module, wherein the camera module comprises a camera, the camera comprises a photosensitive chip, and the apparatus comprises:
a first determining unit, configured to determine a first target area in a first image shot by the camera before a current frame, wherein the first target area is an area on which light compensation needs to be performed in the first image;
a second determining unit, configured to determine a first exposure time period of a first target photosensitive chip row in the current frame based on the first target area, wherein the first target photosensitive chip row refers to a chip row that is in the photosensitive chip and that is used to generate image content in the first target area; and
an indication unit, configured to indicate, based on the first exposure time period, an infrared light source to perform light compensation when the photosensitive chip is exposed in the current frame.

8. The apparatus according to claim 7, wherein the first determining unit is specifically configured to:
determine the first target area in the first image based on a preset target object.

9. The apparatus according to claim 7 or 8, wherein the first target area is a face area in the first image.

10. The apparatus according to any one of claims 7 to 9, wherein the photosensitive chip comprises a plurality of photosensitive chip rows, and a plurality of pixel rows in the first image correspond to the plurality of photosensitive chip rows; and
the second determining unit is specifically configured to:
determine the first target photosensitive chip row corresponding to a pixel row in the first target area in the first image; and
determine the first exposure time period of the first target photosensitive chip row in the current frame.

11. The apparatus according to any one of claims 7 to 10, wherein the first determining unit is further configured to determine a second target area in a second image obtained in the current frame, wherein the second target area is an area on which light compensation needs to be performed in the second image;
the second determining unit is further configured to determine a second exposure time period of a second target photosensitive chip row in a subsequent frame based on the second target area, wherein the second target photosensitive chip row refers to a chip row that is in the photosensitive chip and that is used to generate image content in the second target area; and
the indication unit is further configured to indicate, based on the second exposure time period, the infrared light source to perform light compensation when the photosensitive chip is exposed in the subsequent frame.

12. The apparatus according to any one of claims 7 to 10, wherein the indication unit is further configured to:
determine a third exposure time period of the first target photosensitive chip row in a subsequent frame based on the first exposure time period; and
indicate, based on the third exposure time period, the infrared light source to perform light compensation when the photosensitive chip is exposed in the subsequent frame.

13. A camera module, comprising a processor and a memory, wherein the memory is configured to store program instructions, and the processor is configured to invoke the program instructions to perform the method according to any one of claims 1 to 6.

14. An automobile, wherein the automobile comprises the apparatus according to any one of claims 7 to 12 or the camera module according to claim 13.

15. A computer-readable storage medium, wherein the computer-readable storage medium stores program instructions, and when the program instructions are run by a processor, the method according to any one of claims 1 to 6 is implemented.

16. A chip, wherein the chip comprises a processor and a data interface, and the processor reads, through the data interface, instructions stored in a memory, to perform the method according to any one of claims 1 to 6.
